# EUROPEAN PATENT APPLICATION

(11) **EP 4 460 107 A1**
(43) Date of publication of application: **06.11.2024**
(21) Application number: 21969789.3
(22) Date of filing: 31.12.2021
(51) Int. Cl.: H04W 52/02

(54) **WAKE-UP SIGNAL RECEIVING METHOD AND APPARATUS, WAKE-UP SIGNAL SENDING METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Novagraaf Technologies
(86) International application number: PCT/CN2021/143907
(87) International publication number: WO 2023/123444

(57) **Abstract**

The present application relates to the technical field of mobile communications. Disclosed are a wake-up signal receiving method and apparatus, a wake-up signal sending method and apparatus, and a device and a storage medium. The wake-up signal receiving method comprises: receiving a wake-up signal, wherein the wake-up signal carries reception information of a PDCCH and comprises a wake-up radio (WUR) signal. By means of the present application, when a WUR signal can be used, a wake-up signal is transmitted by using the WUR signal, thereby effectively reducing the energy consumption of a terminal during data transmission. Better power saving performance is provided for the terminal, thereby prolonging the endurance time of the terminal.

## Description

### TECHNICAL FIELD

Embodiments of the present disclosure relate to the technical field of mobile communications, and in particular, to a method and apparatus for receiving wake-up signals, a method and apparatus for transmitting wake-up signals, and a device and a storage medium.

### BACKGROUND

In the evolution of the 5^{th} generation (5G) mobile communication system, stricter requirements are imposed on power saving of a user equipment (UE) in a connected state.

In the related art, an energy-saving signal is introduced. The energy-saving signal is used in conjunction with a discontinuous reception (DRX) mechanism. A terminal receives an indication of the energy-saving signal before an ON duration of DRX. In the case that the terminal needs to transmit or receive data in a DRX cycle, the energy-saving signal "wakes up" the terminal to monitor a physical downlink control channel (PDCCH) during the ON duration of DRX. In the case that the terminal does not need to transmit or receive data in a DRX cycle, the energy-saving signal does not "wake up" the terminal, and the terminal is not required to monitor the PDCCH during the ON duration of DRX.

### SUMMARY

Embodiments of the present disclosure provide a method and apparatus for receiving wake-up signals, a method and apparatus for transmitting wake-up signals, and a device and a storage medium. The technical solutions are as follows.

According to one aspect of the embodiments of the present disclosure, a method for receiving wake-up signals is provided, wherein the method is applicable to a terminal.

The method includes: receiving a wake-up signal, wherein the wake-up signal carries reception information of a PDCCH, and the wake-up signal includes a wake-up radio (WUR) signal.

According to another aspect of the embodiments of the present disclosure, a method for transmitting wake-up signals is provided, wherein the method is applicable to a network device.

The method includes: transmitting a wake-up signal, wherein the wake-up signal carries reception information of a PDCCH, and the wake-up signal includes a WUR signal.

According to another aspect of the embodiments of the present disclosure, an apparatus for receiving wake-up signals is provided. The apparatus is applicable to a terminal.

The apparatus includes: a receiving module, configured to receive a wake-up signal, wherein the wake-up signal carries reception information of a PDCCH, and the wake-up signal includes a WUR signal.

According to another aspect of the embodiments of the present disclosure, an apparatus for transmitting wake-up signals is provided. The apparatus is applicable to a network device.

The apparatus includes: a transmitting module, configured to transmit a wake-up signal, wherein the wake-up signal carries reception information of a PDCCH, and the wake-up signal includes a WUR signal.

According to another aspect of the embodiments of the present disclosure, a terminal is provided. The terminal includes a wake-up receiver.

The wake-up receiver is configured to receive a wake-up signal, wherein the wake-up signal carries reception information of a PDCCH, and the wake-up signal includes a WUR signal.

According to another aspect of the embodiments of the present disclosure, a network device is provided. The network device includes a transceiver.

The transceiver is configured to transmit a wake-up signal, wherein the wake-up signal carries reception information of a PDCCH, and the wake-up signal includes a WUR signal.

According to another aspect of the embodiments of the present disclosure, a computer-readable storage medium is provided. The storage medium stores one or more computer programs. The one or more computer programs, when loaded and run by a processor, cause the processor to perform the method for receiving wake-up signals and/or the method for transmitting wake-up signals as described above.

According to another aspect of the embodiments of the present disclosure, a chip is provided. The chip includes programmable logic circuitry and/or one or more program instructions. The chip is run to perform the method for receiving wake-up signals and/or the method for transmitting wake-up signals as described above.

According to another aspect of the embodiments of the present disclosure, a computer program product or a computer program is provided. The computer program product or the computer program includes one or more computer instructions stored in a computer-readable storage medium. The one or more instructions, when read from the computer-readable storage medium, and executed by a processor, cause the processor to perform the method for receiving wake-up signals and/or the method for transmitting wake-up signals as described above.

The technical solutions according to the embodiments of the present disclosure achieve the following beneficial effects.

Under the condition that a WUR signal can be used, a wake-up signal is transmitted by using the WUR signal, such that the energy consumption of a terminal during data transmission is effectively reduced, and better power saving performance is provided for the terminal, and thus the endurance time of the terminal is prolonged.

### BRIEF DESCRIPTION OF DRAWINGS

For clearer descriptions of the technical solutions in the embodiments of the present disclosure, the accompanying drawings required for describing the embodiments are briefly introduced below Apparently, the accompanying drawings in the following description show merely some embodiments of the present disclosure, and those of ordinary skill in the art may still derive other accompanying drawings from these accompanying drawings without creative efforts.
FIG. 1 is a schematic diagram of a zero-power communication system according to some exemplary embodiments of the present disclosure;
FIG. 2 is a schematic diagram of radio frequency (RF) energy harvesting according to some exemplary embodiments of the present disclosure;
FIG. 3 is a schematic diagram of a backscattering communication process according to some exemplary embodiments of the present disclosure;
FIG. 4 is a schematic diagram of resistive load modulation according to some exemplary embodiments of the present disclosure;
FIG. 5 is a schematic diagram of a coding mode according to some exemplary embodiments of the present disclosure;
FIG. 6 is a schematic diagram of a terminal with a wake-up receiver according to some exemplary embodiments of the present disclosure;
FIG. 7 is a schematic diagram of a mobile communication system according to some exemplary embodiments of the present disclosure;
FIG. 8 is a schematic diagram of a DRX cycle according to some exemplary embodiments of the present disclosure;
FIG. 9 is a schematic diagram of switching between a DRX long cycle and a DRX short cycle according to some exemplary embodiments of the present disclosure;
FIG. 10 is a schematic diagram of an energy-saving signal according to some exemplary embodiments of the present disclosure;
FIG. 11 is a schematic diagram of an energy-saving signal according to some exemplary embodiments of the present disclosure;
FIG. 12 is a schematic diagram of a DRX period according to some exemplary embodiments of the present disclosure;
FIG. 13 is a flowchart of a method for receiving wake-up signals according to some exemplary embodiments of the present disclosure;
FIG. 14 is a schematic diagram of a wake-up cycle according to some exemplary embodiments of the present disclosure;
FIG. 15 is a flowchart of a method for receiving wake-up signals according to some exemplary embodiments of the present disclosure;
FIG. 16 is a flowchart of a method for receiving wake-up signals according to some exemplary embodiments of the present disclosure;
FIG. 17 is a schematic diagram of a paging cycle according to some exemplary embodiments of the present disclosure;
FIG. 18 is a flowchart of a method for receiving wake-up signals according to some exemplary embodiments of the present disclosure;
FIG. 19 is a schematic diagram of DRX cycles according to some exemplary embodiments of the present disclosure;
FIG. 20 is a schematic diagram of a DRX cycle and a wake-up cycle according to some exemplary embodiments of the present disclosure;
FIG. 21 is a flowchart of a method for receiving wake-up signals according to some exemplary embodiments of the present disclosure;
FIG. 22 is a schematic diagram of a paging cycle according to some exemplary embodiments of the present disclosure;
FIG. 23 is a schematic diagram of a paging cycle and a wake-up cycle according to some exemplary embodiments of the present disclosure;
FIG. 24 is a flowchart of a method for transmitting wake-up signals according to some exemplary embodiments of the present disclosure;
FIG. 25 is a block diagram of an apparatus for receiving wake-up signals according to some exemplary embodiments of the present disclosure;
FIG. 26 is a block diagram of an apparatus for transmitting wake-up signals according to some exemplary embodiments of the present disclosure;
FIG. 27 is a schematic structural diagram of a terminal according to some exemplary embodiments of the present disclosure; and
FIG. 28 is a schematic structural diagram of a network device according to some exemplary embodiments of the present disclosure.

### DETAILED DESCRIPTION

For clearer descriptions of the objects, technical solutions, and advantages of the present disclosure, the embodiments of the present disclosure are further described in detail below with reference to the accompanying drawings.

A network architecture and a service scenario described in the embodiments of the present disclosure are intended to describe the technical solutions in the embodiments of the present disclosure more clearly, but do not constitute any limitation on the technical solutions according to the embodiments of the present disclosure. Those of ordinary skill in the art are clear that, with evolution of the network architecture and emergence of a new service scenario, the technical solutions according to the embodiments of the present disclosure are also applicable to similar technical problems.

Before the technical solutions of the present disclosure are described, some technical knowledge involved in the present disclosure is first described.

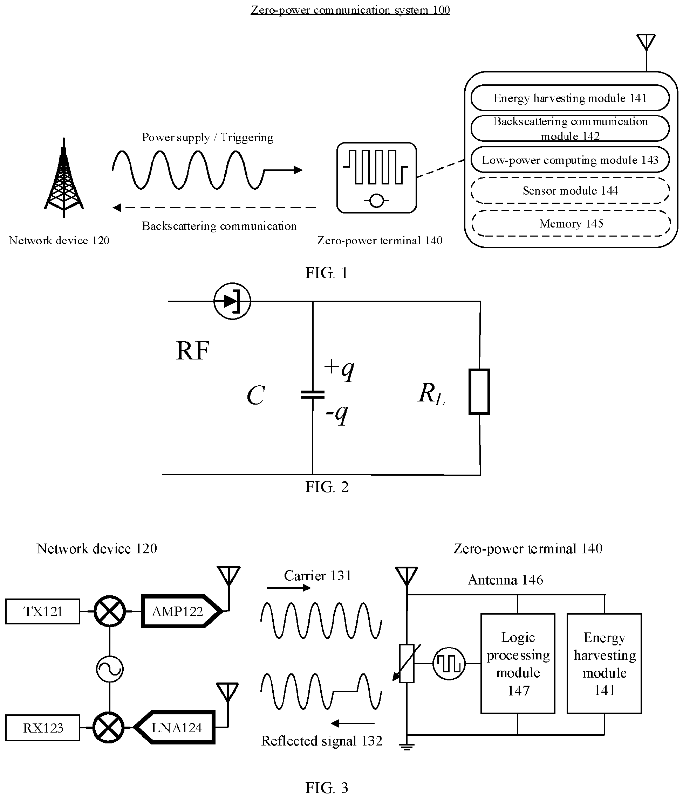

FIG. 1 is a schematic diagram of a zero-power communication system 100. The zero-power communication system 100 includes a network device 120 and a zero-power terminal 140.

The network device 120 is configured to transmit a wireless energy supply signal and a downlink communication signal to the zero-power terminal and receive a backscattering signal from the zero-power terminal. The zero-power terminal 140 includes an energy harvesting module 141, a backscattering communication module 142, and a low-power computing module 143. The energy harvesting module 141 may harvest energy carried by radio waves in space for driving the low-power computing module 143 of the zero-power terminal 140 and implement backscattering communication. Upon acquiring the energy, the zero-power terminal 140 may receive a control signaling from the network device 120 and transmit data to the network device 120 in a backscattering manner according to the control signaling. The sent data may be from data stored in the zero-power terminal (e.g., identity or pre-written information, such as production date, brand, and manufacturer).

The zero-power terminal 140 may further include a sensor module 144 and a memory 145. The sensor module 144 may include various sensors. The zero-power terminal 140 may report, based on a zero-power mechanism, data collected by the various sensors. The memory 145 is configured to store some basic information (such as item identifiers) or acquire sensing data such as ambient temperature and ambient humidity.

The zero-power terminal does not need any battery, and at the same time, simple signal demodulation, decoding or coding, modulation, and other simple operations may be implemented by using the low-power computing module. Therefore, a zero-power module only requires a minimalist hardware design, making a zero-power device very low-cost and small in size.
In the following, key technologies of zero-power communication are introduced.

### •RF Power Harvesting

FIG. 2 is a schematic diagram of RF power harvesting. RF power harvesting is to harvest, based on a principle of electromagnetic induction, spatial electromagnetic wave energy using an RF module by electromagnetic induction and connection with a capacitor C and a load resistor R_{L} in a parallel relationship, and to acquire energy required to drive the zero-power terminal to operate, which is used to, for example, drive a low-power demodulation module, a modulation module, a sensor, and memory reading. Therefore, the zero-power terminal does not need any traditional battery.

### •Backscattering Communication

FIG. 3 is a schematic diagram of a backscattering communication process. The zero-power terminal 140 receives a wireless signal carrier 131 from a transmit (TX) module 121 of the network device 120 by using an asynchronous mapping procedure (AMP) 122, modulates the wireless signal carrier 131, loads to-be-sent information using a logic processing module 147, and harvests RF energy using the energy harvesting module 141. The zero-power terminal 140 radiates a modulated reflected signal 132 using an antenna 146. This information transmission process is called backscattering communication. A receive (RX) module 123 of the network device 120 receives the modulated reflected signal 132 using a low noise amplifier (LNA) 124. Backscattering and load modulation functions are inseparable. Load modulation is a process of completing modulation by adjusting and controlling circuit parameters of an oscillation circuit of the zero-power terminal 140 according to rhythms of data streams to cause parameters such as impedance of electronic tags to change accordingly.

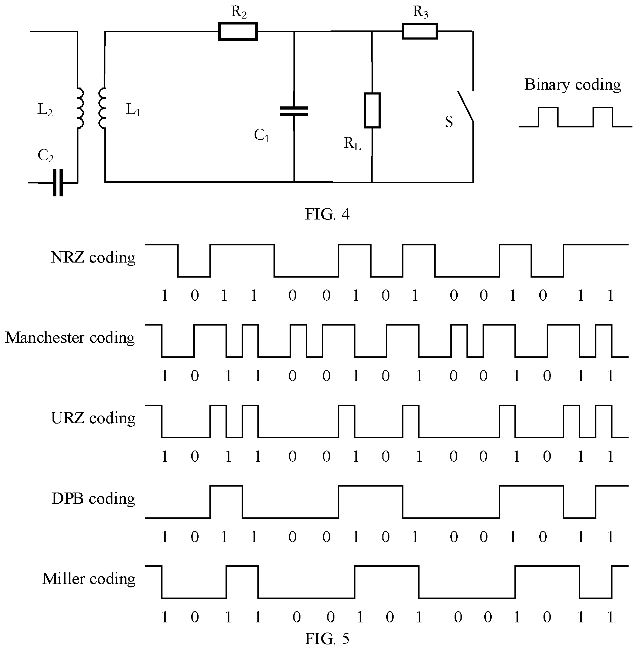

A load modulation technology mainly includes resistive load modulation and capacitive load modulation. FIG. 4 is a schematic diagram of resistive load modulation. In the resistive load modulation, the load resistor R_{L} is connected in parallel to a third resistor R₃, a switch S is turned on or turned off based on binary-coded control, turn-on or turn-off of the third resistor R₃ may cause a change in a voltage on a circuit, the load resistor R_{L} is connected in parallel to a first capacitor Ci, the load resistor R_{L} is connected in series to a second resistor R₂, and the second resistor R₂ is connected in series to a first inductor L₁. The first inductor L₁ is coupled with a second inductor L₂, and the second inductor L₂ is connected in series to a second capacitor C₂. Amplitude shift keying (ASK) may be implemented. That is, signal modulation and transmission are implemented by adjusting amplitude of the backscattering signal from the zero-power terminal. Similarly, in the capacitive load modulation, a resonant frequency of a circuit may be changed by turn-on or turn-off of a capacitor, such that frequency shift keying (FSK) is implemented. That is, signal modulation and transmission are implemented by adjusting an operating frequency of the backscattering signal from the zero-power terminal.

The zero-power terminal carries out information modulation on an incoming signal by load modulation, such that the backscattering communication process is implemented. The zero-power terminal has the following significant advantages: the terminal does not actively transmit any signal, and thus complex RF links such as a power amplifier (PA) and an RF filter are not required; the terminal is not required to actively generate any high-frequency signal, and thus a high-frequency crystal oscillator is not required; and the terminal carries out signal transmission by backscattering communication, without consuming energy of the terminal.

Next, a coding mode of zero-power communication is introduced.

FIG. 5 is a schematic diagram of a coding mode. For data transmitted by electronic tags, binary "1" and binary "0" may be represented by using different forms of codes. A radio frequency identification (RFID) system generally adopts one of: non-return-to-zero (NRZ) coding, Manchester coding, unipolar return-to-zero (URZ) coding, differential binary phase (DBP) coding, Miller coding, or differential coding. That is, 0 and 1 may be represented by using different pulse signals.
- In NRZ coding, binary "1" is represented by a high level, and binary "0" is represented by a low level. FIG. 5 is a schematic diagram of levels of binary data 101100101001011 encoded by NRZ coding.
- Manchester coding is also referred to as split-phase coding. In Manchester coding, a binary value is represented by a change (rise or fall) in a level in a half bit cycle within a bit length. A negative transition in a half bit cycle represents binary "1", and a positive transition in a half bit cycle represents binary "0". An error in data transmission means that when data bits sent by a plurality of electronic tags at the same time have different values, received rising and falling edges cancel each other out, resulting in an uninterrupted carrier signal throughout the entire bit length. In Manchester coding, a state without a change may not exist within the bit length. A reader-writer may determine, by using the error, a specific location where a collision occurs. Manchester coding helps discover data transmission errors, and is generally used for data transmission from the electronic tags to the reader-writer when load modulation or backscattering modulation of carriers is adopted. FIG. 5 is a schematic diagram of levels of binary data 101100101001011 encoded by Manchester coding.

In URZ coding, binary "1" is represented by a high level in a first half bit cycle of URZ coding, and binary "1" is represented by a low-level signal that lasts for an entire bit cycle. FIG. 5 is a schematic diagram of levels of binary data 101100101001011 encoded by URZ coding.

In DBP coding, binary "0" is represented by any edge in a half bit cycle, and binary "1" is represented by no edge. In addition, levels are inverted at the beginning of each bit cycle. A bit beat is relatively easy for the receiver to reconstruct. FIG. 5 is a schematic diagram of levels of binary data 101100101001011 encoded by DBP coding.

In Miller coding, binary "1" is represented by any edge in a half bit cycle, and binary "0" is represented by a constant level in a next bit cycle. Level alternation occurs at the beginning of a bit cycle. A bit beat is relatively easy for the receiver to reconstruct. FIG. 5 is a schematic diagram of levels of binary data 101100101001011 encoded by Miller coding.

In differential coding, each binary "1" to be transmitted may cause a change in a signal level, while for binary "0", the signal level remains the same.

Next, zero-power terminals are introduced in detail. Based on energy sources and usage modes of the zero-power terminals, the zero-power terminals may be classified into the following types.

### •Passive zero-power terminal

Such a zero-power terminal does not need a built-in battery. When the zero-power terminal is close to a network device, the zero-power terminal is within a near field range formed by antenna radiation of the network device. Exemplarily, the network device is a reader-writer of the RFID system. Therefore, an antenna of the zero-power terminal generates an induced current by electromagnetic induction, and the induced current drives a low-power chip circuit of the zero-power terminal. Demodulation of a forward link signal and modulation of a backward link signal are implemented. For a backscattering link, the zero-power terminal carries out signal transmission by backscattering. The passive zero-power terminal does not need a built-in battery to drive either for the forward link or a reverse link, and is a true zero-power terminal. The passive zero-power terminal does not need any battery, in which an RF circuit and a baseband circuit are very simple. For example, the passive zero-power terminal does not need devices such as an LNA, a PA, a crystal oscillator, and an analog-to-digital converter (ADC), and has many advantages such as small size, light weight, very low price, and long service life.

### •Semi-passive zero-power terminal

The semi-passive zero-power terminal is not provided with any conventional battery, which may harvest radio wave energy by an RF energy harvesting module, and at the same time, store the harvested energy in an energy storage unit. Exemplarily, the energy storage unit is a capacitor. Upon acquiring the energy, the energy storage unit may drive a low-power chip-consumption circuit of the zero-power terminal. Demodulation of a forward link signal and modulation of a backward link signal are implemented. For a backscattering link, the zero-power terminal carries out signal transmission by backscattering.

The semi-passive zero-power terminal does not need any built-in battery to drive either for the forward link or a reverse link, and in operation, uses energy stored in the capacitor that is from radio energy harvested by the RF energy harvesting module, which is a true zero-power terminal. The semi-passive zero-power terminal inherits many advantages of the passive zero-power terminal, such as small size, light weight, very low price, and long service life.

### •Active zero-power terminal

The active zero-power terminal may be provided with a built-in battery. The battery is configured to drive a low-power chip circuit of the zero-power terminal. Demodulation of a forward link signal and modulation of a backward link signal are implemented. However, for a backscattering link, the zero-power terminal carries out signal transmission by backscattering. Zero power of the active zero-power terminal is mainly reflected in the fact that signal transmission in the reverse link does not require power of the terminal but uses backscattering. In the active zero-power terminal, the built-in battery supplies power to an RFID chip, and thus a reading/writing distance of a tag is increased and reliability of communication is improved. The active zero-power terminal is applicable to some scenarios where relatively high requirements are put forward for a communication distance and a read latency.

With the development of the communication industry, especially the increase in applications in the 5G industry, there are more and more types and application scenarios of connected devices or objects, and stricter requirements are imposed on prices and power consumption of communication terminals. The application of battery-free and low-cost passive Internet of things (IoT) devices has become a key technology for cellular IoT, such that types and numbers of network link terminals are increased, and thus Internet of everything is truly implemented. The passive IoT devices may be based on zero-power communication technology, such as RFID technology, and extended on this basis to be applicable to the cellular loT.

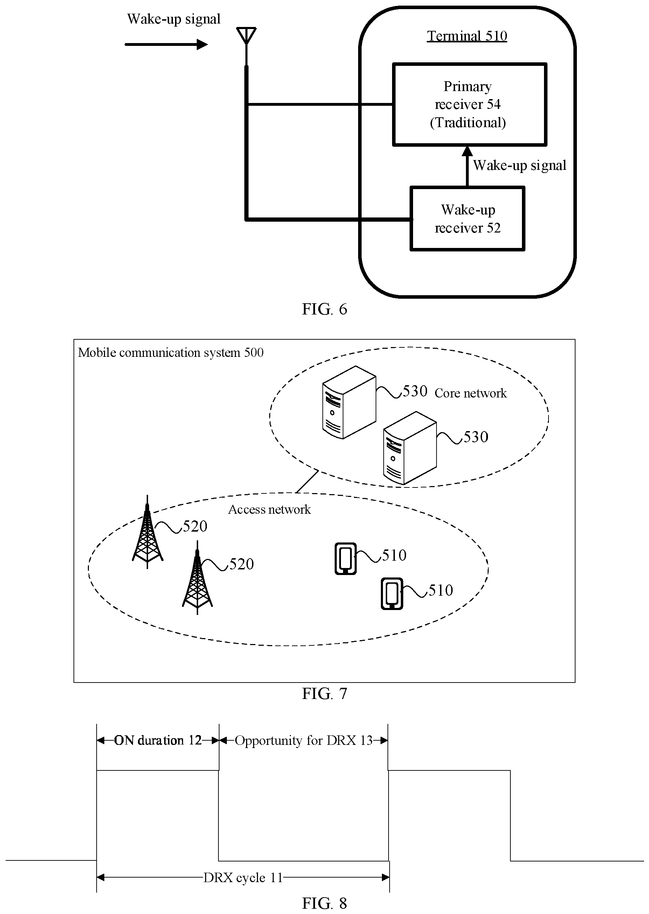

Based on the above idea of the zero-power terminal, the present disclosure provides a schematic diagram of a terminal 510 with a wake-up receiver. As shown in FIG. 6, the terminal 510 includes a wake-up receiver 52 and a primary receiver 54.

The wake-up receiver 52 is a zero-power receiver or a low-power receiver with power consumption lower than a predetermined condition. The wake-up receiver 52 receives a wake-up signal in a first transmission mode.

The primary receiver 54 is a traditional receiver. Alternatively, the wake-up receiver 52 receives the wake-up signal in a second transmission mode.

Under the same condition, for example, both for transmission of the wake-up signal, the first transmission mode has lower energy consumption than the second transmission mode. Different from the primary receiver 54 of a UE, the wake-up receiver 52 is a primary receiver 54 module specially configured to receive the wake-up signal. Compared with the primary receiver 54 of the UE, the wake-up receiver 52 is a receiver with extremely low power consumption or even zero power consumption, which uses a technology similar to RFID, including passive, envelope detection, energy harvesting, or the like. The wake-up receiver 52 may be activated by a wireless RF signal and provide energy to drive the wake-up receiver 52 to receive the wake-up signal and further transmit indication information to the primary receiver 54 of the UE, to wake up the primary receiver 54 of the UE to further receive a control channel. The wake-up receiver 52 may be combined with the UE as an additional module of the primary receiver of the UE, or may be used alone as a wake-up function module of the UE.

FIG. 7 is a schematic diagram of a mobile communication system 500 according to some exemplary embodiments of the present disclosure. The mobile communication system 500 includes at least the following functional nodes:
a terminal 510: provided with both the wake-up receiver 52 and the primary receiver 54, as shown in FIG. 6.
a network device 520: providing a communication link for the terminal 510, and/or providing the terminal 510 with radio waves based on the radio wave energy harvested by the RF energy harvesting module, that is, supplies energy.
a core network (CN) device 530: performing data processing and reception, and controlling and managing related services, mobility, a user plane, a control plane, a gateway, and other functions of the terminal 510.

Next, DRX is introduced.

For reduction of power consumption of the terminal, a DRX mechanism is employed in a long term evolution (LTE) system and a new radio (NR) system, such that the receiver of terminal does not have to be an ON state all the time in the case that no data needs to be received, but enters a DRX state, and thus power saving is achieved. The DRX mechanism includes configuring a DRX cycle for a UE in a radio resource control connected state (RRC_CONNECTED state). A DRX cycle includes an ON duration and an opportunity for DRX. In the ON duration, the UE monitors and receives downlink channels including a PDCCH and signals. In the opportunity for DRX, the UE does not receive the downlink channels such as the PDCCH and the signals to reduce power consumption. FIG. 8 is a schematic diagram of a DRX cycle. A DRX cycle 11 includes an ON duration 12 and an opportunity for DRX 13.

The DRX cycle of the UE may be configured as a short cycle and a long cycle, that is, a total of two types. When the UE is in the DRX short cycle, a timer is started and restarted according to reception of data scheduling. In the case of timeout of the timer, the DRX long cycle may be switched to, to further achieve power saving. At the same time, the network device may also enter the DRX short cycle or the DRX long cycle through a DRX command. The DRX command is transmitted to the UE over a medium access control (MAC) control element (CE).

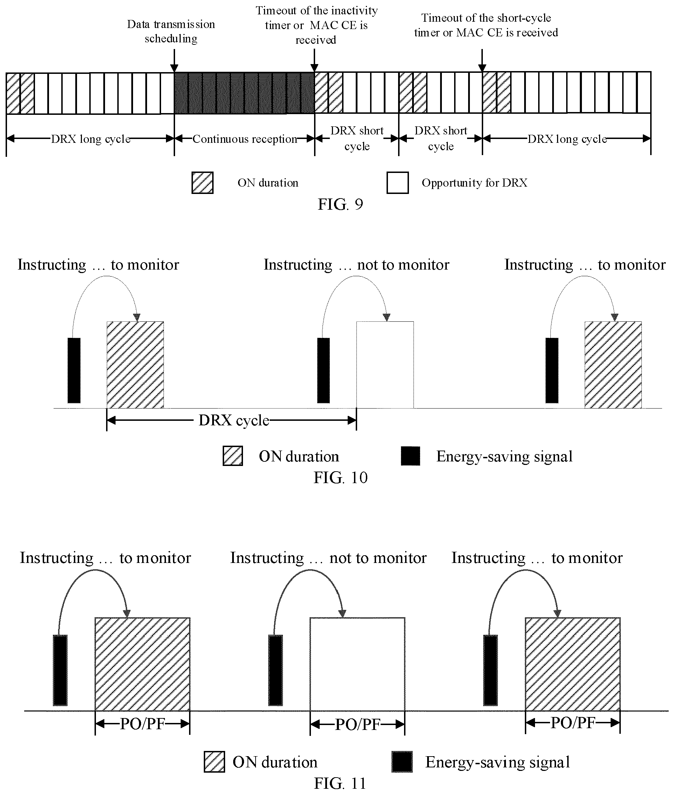

FIG. 9 is a schematic diagram of switching between a DRX long cycle and a DRX short cycle. The UE is initially in a DRX long cycle state. In response to receiving a data transmission scheduel, the UE starts or restarts an inactivity timer (drx-InactivityTimer). In response to timeout of the inactivity timer or receiving the DRX command over the MAC CE, the UE enters the DRX short cycle and starts a short-cycle timer (drx-ShortCycleTimer). In response to timeout of the short-cycle timer or receiving a long DRX command over the MAC CE, the UE enters the DRX long cycle state. The UE is required to keep detecting the PDCCH prior to timeout of the inactivity timer. The UE is required to perform DRX according to the DRX short cycle prior to timeout of the short-cycle timer.

Next, an energy-saving policy of the terminal is introduced.

For the terminal in a connected state, in the evolution of 5G, stricter requirements are imposed on energy saving of the terminal. For an existing DRX mechanism, in each ON duration, the terminal is required to continuously monitor the PDCCH to determine whether the network device schedules transmission of data transmitted to the terminal. However, from the perspective of the terminal, in the case that data transmission is not required, the terminal has no need to receive data for a long period of time. However, in the above DRX mechanism, there is still a need to regularly monitor the PDCCH according to a wake-up mechanism based on an instruction in the DRX mechanism. For the above situation, there is room for further optimization of the energy-saving policy of the terminal.

An energy-saving signal is introduced into the R16 standard, to achieve energy saving for the terminal in the connected state. FIG. 10 is a schematic diagram of an energy-saving signal.

Exemplarily, the energy-saving signal is used in conjunction with the DRX mechanism, and the terminal receives an indication of an energy-saving wake-up signal before the ON duration in the DRX cycle. In the case that there is data transmission for the terminal in a DRX cycle, the energy-saving signal instructs the terminal to monitor the PDCCH during the ON duration of the DRX cycle. On the contrary, in the case that there is no data transmission for the terminal in a DRX cycle, the energy-saving signal instructs the terminal not to monitor the PDCCH during the ON duration of the DRX cycle. Compared with the DRX mechanism, the introduction of the energy-saving signal allows the terminal not to monitor the PDCCH during the ON duration of the DRX cycle when no data is transmitted, thereby saving energy consumption of the terminal.

Exemplarily, a carry format of the energy-saving signal is a DCI format 2_6 (Format 2_6). A time when the terminal is outside the ON duration in the DRX cycle is called an inactive time, and a time during the ON duration in the DRX cycle is called an active time. The energy-saving signal indicates whether the terminal monitors the PDCCH in the ON duration in the DRX cycle.

In the R17 standard, the energy-saving policy for the terminal in the connected state is further optimized, and an enhanced scheme for search space set group switching in the R16 is introduced, which skips monitoring of the PDCCH to save energy when required, that is, a PDCCH skipping scheme. Control information related to search space set group switching and PDCCH skipping is also carried on the PDCCH.

The terminal in an idle state or an inactive state receives a paging message by DRX, there is a PO in a DRX cycle, and the terminal only receives the paging message at the PO and does not receive any paging message at times other than the PO, to achieve energy saving. During actual use, when the terminal is not paged, the terminal periodically detects the PDCCH at the corresponding PO, but there is no paging indication information transmitted to the terminal, which causes a waste of power.

Similar to the energy saving policy for the terminal in the connected state in the R16 standard, in the R17 standard, energy saving of the UE in the idle state receiving the paging message is optimized and a similar energy-saving signal is introduced. FIG. 11 is a schematic diagram of an energy-saving signal.

An energy-saving signal is referred to as a paging early indication (PEI), which indicates whether the UE receives a paged PDCCH at a target PO prior to arrival of the PO. The energy-saving signal is carried on the PDCCH, and a carry format of the energy-saving signal is a DCI format 2_7 (Format 2_7). The PDCCH-based energy-saving signal may also carry more energy-saving information, which may carry, for example, sub-grouping information to indicate terminal sub-groups corresponding to the energy-saving information. Sub-grouping is to further group a plurality of UEs corresponding to a PO calculated based on UE identifiers. The sub-group information is combined with the energy-saving information, which can provide a more precise indication of whether there is a need to receive a paged terminal at the target PO.

Next, a paging technology is introduced.

In the NR system, the network device may transmit paging to terminals in an idle state and a connected state (RRC-Connection). A paging process may be triggered by a CN device or an access network device, and is used to transmit a paging request to the terminal in the idle state, or to notify a system information update, and to notify the terminal to receive information such as an earthquake and tsunami warning system (ETWS) and a commercial mobile alert system (CMAS). Upon receiving the paging message from the CN, a base station interprets content therein to acquire a tracking area identity (TAI) list of the UE, and performs, through an air interface, paging in a cell belonging to a tracking area in the list. A CN Domain of the paging message is not be decoded at the base station, but is transparently transmitted to the terminal. Upon receiving the paging message from the CN, the base station aggregates paging messages of terminals having a same PO into one paging message and transmits the paging message to the related terminals over paging channels. The terminal receives a paging parameter over a system message, calculates the PO based on the paging parameter and a UE identifier of the terminal, and receives the paging message at a corresponding time. The paging message is carried on a physical downlink shared channel (PDSCH). The UE acquires paging indication information by detecting the PDCCH scrambled with a paging radio network temporary identifier (P-RNTI), thereby receiving the paging message. The terminal in the idle state may save power by DRX. The UE acquires DRX related information from system information broadcast (SIB2). The paging message is received by monitoring the PDCCH scrambled with the P-RNTI at a PO on a paging frame (PF) in a DRX cycle.

The PF indicates a system frame number (SFN) where the paging message should appear, and the PO indicates a time at which the paging message may appear. A PF may include one or more POs. In each DRX cycle or paging cycle, the UE is required only to monitor the PO corresponding to the terminal.

An SFN that satisfies the following formula may be used as a PF: (SFN+PF_offset) mod T=(T div N)*(UE_ID mod N); wherein div denotes an integer division operation, and mod denotes a modulo operation.

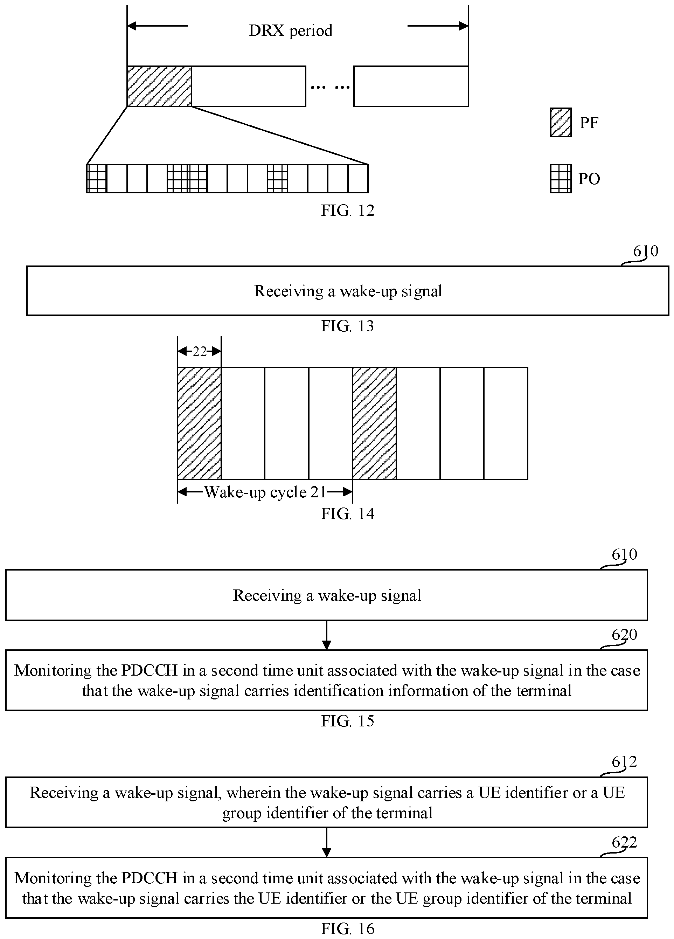

In the PF, a method for calculating an index of the PO corresponding to a UE_ID, that is, i_s, is: i_s=floor(UE_ID/N) mod Ns, wherein T denotes the DRX cycle of the UE. Where a default DRX cycle indicated in a system message is denoted as T_sib and a DRX value of the UE T_ue is configured, T=min (T_ue, T_sib). Where T_ue is not configured, a default value indicated in the system message is used, i.e., T= T_sib. UE_ID=(5G-S-TMSI mod 1024). N represents a number of PFs in T. Ns represents a number of POs in a PF. PF_offset represents a frame offset for determining a PF. FIG. 12 is a schematic diagram of a DRX period.

FIG. 13 is a flowchart of a method for receiving wake-up signals according to some exemplary embodiments of the present disclosure. Description is given in the embodiments based on an example in which the method is appliable to a terminal. The method includes the following processes.

**In process 610,** a wake-up signal is received.

Exemplarily, the wake-up signal carries reception information of a PDCCH; and the wake-up signal includes a WUR signal. Exemplarily, the wake-up signal adopts a first transmission mode, that is, the WUR signal is transmitted in the first transmission mode, while the PDCCH adopts a second transmission mode. At least one of a receiver, a waveform, a modulation mode, a coding mode, or a multiple access mode is different between the first transmission mode and the second transmission mode.

In some embodiments, a first transmission parameter of energy-saving information has lower energy consumption than a second transmission parameter of a control channel.

The first transmission parameter is a transmission parameter corresponding to a wake-up receiver. Illustratively, the first transmission parameter is a transmission parameter corresponding to a zero-power- consumption receiver; and/or, the first transmission parameter is a transmission parameter corresponding to a low-power receiver.

The second transmission parameter is a transmission parameter corresponding to a traditional receiver; or a transmission parameter corresponding to a conventional receiver; or a transmission parameter corresponding to a non-"zero-power receiver + low-power receiver".

A modulation mode of the first transmission parameter includes any one of ASK modulation, FSK modulation, or 2phase-shift keying (2PSK) modulation. A modulation mode of the second transmission parameter includes any one of orthogonal frequency-division multiplexing (OFDM) modulation, quadrature phase-shift keying (QPSK) modulation, or quadrature amplitude modulation (QAM).

ASK is digital modulation in which amplitude of a carrier varies with a digital baseband signal. In the case that the digital baseband signal is binary, the modulation mode is binary amplitude shift keying (2ASK). 2ASK is also referred to as on-off keying (OOK), which control on and off of a sinusoidal carrier by using a unipolar non-return-to-zero code sequence. In some embodiments, ASK further includes 4ASK, 8ASK, or the like, which is not limited in the embodiments.

FSK is digital modulation in which a frequency of the carrier varies with the digital baseband signal. In the case that the digital baseband signal is binary, the modulation mode is binary frequency shift keying (2FSK). 2FSK completes information transmission by converting two different carrier signals into digital signals. A state of transmitted information is represented by a change of the carrier frequency. The frequency of the modulated carrier varies with a state of a binary sequence 0 and 1. In some embodiments, FSK further includes 4FSK, 8FSK, or the like, which is not limited in the embodiment.

PSK is digital modulation in which a phase of the carrier varies with the digital baseband signal. 2PSK is a simplest form of PSK, and conveys binary information over two carriers with an initial phase interval of 180, also known as BPSK. QPSK is quaternary PSK, and represents the input digital information using four different phase differences of the carrier.

OFDM is multi carrier modulation (MCM), and its main principle is to divide a channel into several orthogonal sub-channels, convert high-speed data signals into parallel low-speed sub-data streams, and modulate the sub-data streams on each of the sub-channels for transmission. OFDM includes V-OFDM, W-OFDM, F-OFDM, MIMO-OFDM, multi-band-OFDM, or the like, which is not limited in this embodiment.

QAM is a double-sideband modulation in which two mutually orthogonal co-frequency carriers are suppressed by two independent baseband digital signals, and two-way parallel digital information transmissions is achieved by using the property that the modulated signals are orthogonal in frequency spectrums in a same bandwidth. QAM is a modulation technology that combines m-ary amplitude shift keying (MASK) and m-ary phase-shift keying (MPSK) together, such that the bandwidth is doubled.

The first transmission parameter adopts a simple low-order digital modulation mode, and the second transmission parameter adopts a relatively complex high-order orthogonal digital modulation mode, and thus the signal complexity of the first transmission parameter is lower than that of the second transmission parameter.

It should be noted that the examples of the modulation mode of the first transmission parameter and the modulation mode of the second transmission parameter in the above embodiments are only examples, and should not constitute any limitation on the present disclosure, and other existing or future-defined modulation modes are not excluded from generating the first transmission parameter or the second transmission parameter.

The first transmission parameter and the second transmission parameter have different coding modes. The coding mode of the first transmission parameter includes any one of NRZ coding, Manchester coding, URZ coding, DBP coding, Miller coding, or differential coding. The coding mode of the second transmission parameter includes any one of a reed-muller (RM) code, a tail biting CC (TBCC), a turbo code, an outer code, a low density parity check code (LDPC), or a Polar code.

The first transmission parameter and the second transmission parameter have different multiple access modes. The multiple access mode of the first transmission parameter includes any one of frequency-division multiple access (FDMA), time-division multiple access (TDMA), or code-division multiple access (CDMA). The multiple access mode of the second transmission parameter includes any one of orthogonal frequency-division multiple access (OFDMA) or discrete Fourier transform (DFT)-spread OFDM (DFTS-OFDM).

It should be understood that signal waveforms generated using different modulation modes are different. In the embodiments of the present disclosure, a first feedback signal and a second feedback signal have different modulation modes, and thus waveforms of the first feedback signal and the second feedback signal are different.

Exemplarily, the wake-up receiver in the terminal receives the wake-up signal. That is, the wake-up signal is received in the first transmission mode.

In some embodiments, the wake-up signal carries identification information. Exemplarily, the identification information includes, but is not limited to, at least one of:
- a UE identifier or a UE group identifier (exemplarily, the PDCCH carries scheduling information and/or common control information for data transmission);
- a DRX configuration identifier or a DRX group configuration identifier (exemplarily, the PDCCH carries scheduling information and/or common control information for data transmission); or
- a PO/PF identifier or a PO/PF group identifier (exemplarily, the PDCCH carries paging indication information).

It should be noted that in the embodiments, the method for receiving wake-up signals may include receiving the wake-up signal periodically or receiving the wake-up signal at any time. In the case of receiving the wake-up signal at any time, the terminal may receive the wake-up signal at any time point. In the case of receiving the wake-up signal periodically, the wake-up signal is received based on a wake-up cycle. The wake-up cycle is a time interval in which a time unit configured to receive the wake-up signal occurs. FIG. 14 is a schematic diagram of a wake-up cycle. There are four time units having an equal time length in a wake-up cycle 21. A first time unit 22 is a time unit configured to receive the wake-up signal. The wake-up cycle 21 is a time interval in which a time unit configured to receive the wake-up signal occurs, that is, four time units.

During receiving the wake-up signal, the wake-up receiver of the terminal is in an on state, and in order to reduce a data transmission delay, as described above, the wake-up receiver may remain on, that is, receive the wake-up signal at any time. The time unit for receiving the wake-up signal is not limited. When data arrives, the terminal may be instructed to monitor the PDCCH by the wake-up signal in time. Those skilled in the art may understand that receiving the wake-up signal is irrelevant to the ON duration in the DRX mechanism.

In summary, in the method according to the embodiments, on the condition that a WUR signal can be used, a wake-up signal is transmitted by using the WUR signal, such that the energy consumption of a terminal during data transmission is effectively reduced, better power saving performance is provided for the terminal, and thus the endurance time of the terminal is prolonged.

Next, a process of monitoring the PDCCH is introduced.

FIG. 15 is a flowchart of a method for receiving wake-up signals according to some exemplary embodiments of the present disclosure. Description is given in the embodiments based on an example in which the method is appliable to a terminal. The method includes the following processes.

**In process 610,** a wake-up signal is received.

Exemplarily, the wake-up signal carries reception information of a PDCCH; and the wake-up signal includes a WUR signal. Exemplarily, the wake-up signal adopts a first transmission mode, that is, the WUR signal is transmitted in the first transmission mode, while the PDCCH adopts a second transmission mode. At least one of a receiver, a waveform, a modulation mode, a coding mode, or a multiple access mode is different between the first transmission mode and the second transmission mode.

In some embodiments, the wake-up signal carries identification information. Exemplarily, the identification information includes, but is not limited to, at least one of:
a UE identifier or a UE group identifier (exemplarily, the PDCCH carries scheduling information and/or common control information for data transmission);
a DRX configuration identifier or a DRX group configuration identifier (exemplarily, the PDCCH carries scheduling information and/or common control information for data transmission); or
a PO/PF identifier or a PO/PF group identifier (exemplarily, the PDCCH carries paging indication information).

**In process 620,** the PDCCH is monitored in a second time unit associated with the wake-up signal in the case that the wake-up signal carries identification information of the terminal.

Exemplarily, a time unit where the wake-up signal is located is a first time unit, a time unit where the PDCCH is monitored is the second time unit, and the second time unit is a time unit associated with the wake-up signal. Time lengths of the first time unit and the second time unit are generally different, but a situation where the time lengths are equal is not excluded. There is a delay between the first time unit and the second time unit.

It should be noted that in the embodiments of the present disclosure, the wake-up signal is received based on a wake-up receiver, the PDCCH is received based on a primary receiver, the wake-up receiver wakes up the primary receiver upon receiving the wake-up signal, and the primary receiver receives the PDCCH when in an on state.

It should be noted that the second time unit in the present disclosure monitors the PDCCH based on the wake-up signal to achieve power saving. Those skilled in the art can understand that, as introduced in the embodiment shown in FIG. 13, the method for receiving wake-up signals may include receiving the wake-up signal periodically or receiving the wake-up signal. Correspondingly, the second time unit may be periodic or non-periodic. That is, different from the content in the related art that the PDCCH is monitored based on a periodic time unit or a semi-statically configured time unit, in the present disclosure, the PDCCH is monitored based on the wake-up signal.

In some embodiments, the second time unit is determined based on the first time unit and a delay, and the delay describes a time interval between the first time unit and the second time unit.

Further, in some embodiments, the delay is determined in, but not limited to, any one of the following manners.
- The delay is predefined.

The predefined delay is determined based on a capability of the terminal. For example, a capability related to the delay of turning on the primary receiver of the terminal.
- The delay is pre-configured by a network device.

Exemplarily, the delay pre-configured by the network device may be pre-configured and determined prior to receiving the wake-up signa or pre-configured and determined when receiving the wake-up signal.
- The delay is determined according to a search space of the PDCCH.

Exemplarily, a start time of the second time unit is a start time of a relevant PDCCH monitoring occasion, the relevant PDCCH monitoring occasion is a most recent PDCCH monitoring occasion in the case that the first time unit satisfies a first delay, a second delay is between an end time of the first delay and the most recent PDCCH monitoring occasion, and the delay is a sum of the first delay and the second delay. The PDCCH monitoring occasion is determined based on the search space of the PDCCH.
- The delay is determined according to indication information of the wake-up signal.

The indication information may directly determine the delay. For example, the indication information carries length information of the delay. The indication information may alternatively indirectly determine the delay. For example, the indication information carries information of the second time unit for monitoring the PDCCH. The indication information may be carried in the wake-up signal or transmitted separately before the wake-up signal is received.

In summary, in the method according to the embodiments, under the condition that a WUR signal can be used, a wake-up signal is transmitted by using the WUR signal; and the PDCCH is monitored only in the case that the wake-up signal carries identification information of a terminal, such that the energy consumption of the terminal during data transmission is effectively reduced, better power saving performance is provided for the terminal, and thus the endurance time of the terminal is prolonged.

Next, different identification information carried in the wake-up signal is sequentially introduced. The wake-up signal carries the identification information in the following three ways.
- First, the wake-up signal carries a UE identifier or a UE group identifier.
- Second, the wake-up signal carries a DRX configuration identifier or a DRX group configuration identifier.
- Third, the wake-up signal carries a PO/PF identifier or a PO/PF group identifier.

Description is given hereinafter for the first way in which the wake-up signal carries a UE identifier or a UE group identifier.

FIG. 16 is a flowchart of a method for receiving wake-up signals according to some exemplary embodiments of the present disclosure. Description is given in the embodiments based on an example in which the method is appliable to a terminal. The method includes the following processes.

**In process 612,** a wake-up signal is received, wherein the wake-up signal carries a UE identifier or a UE group identifier of the terminal.

Exemplarily, the wake-up signal carries reception information of a PDCCH; and the wake-up signal includes a WUR signal. Exemplarily, the wake-up signal adopts a first transmission mode, that is, the WUR signal is transmitted in the first transmission mode, while the PDCCH adopts a second transmission mode. At least one of a receiver, a waveform, a modulation mode, a coding mode, or a multiple access mode is different between the first transmission mode and the second transmission mode.

The wake-up signal carries identification information, wherein the identification information includes a UE identifier or a UE group identifier.

**In process 622,** the PDCCH is monitored in a second time unit associated with the wake-up signal in the case that the wake-up signal carries the UE identifier or the UE group identifier of the terminal.

Exemplarily, a wake-up receiver in the terminal receives the wake-up signal, the UE identifier or the UE group identifier carried in the wake-up signal is used to trigger a corresponding UE or UE group, and a primary receiver is turned on to monitor the PDCCH in the second time unit associated with the wake-up signal.

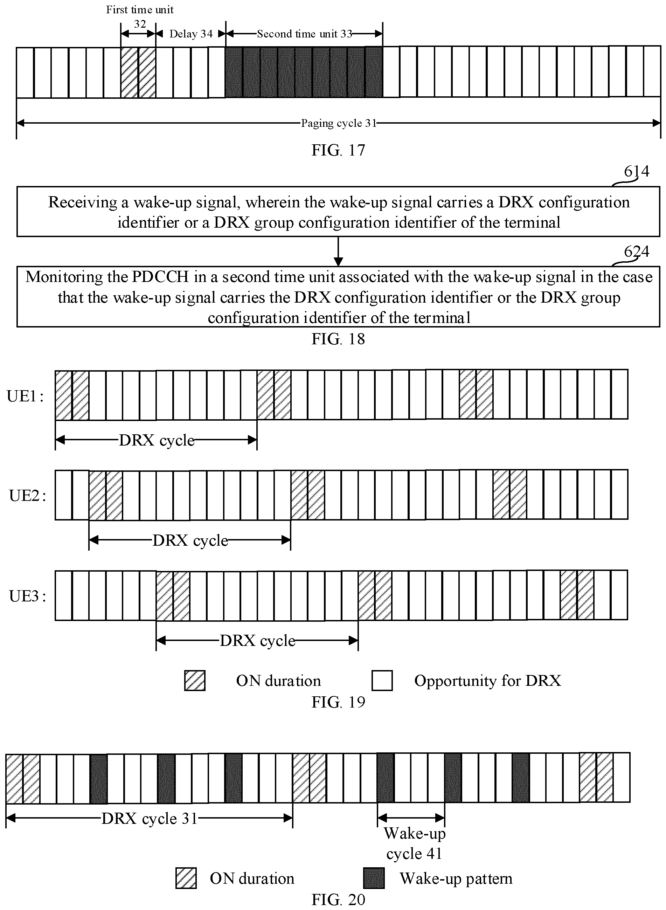

Specifically, the PDCCH is monitored based on a first timer. Exemplarily, the first timer functions similarly to an inactive timer. In the case of receiving the wake-up signal by the terminal, the first timer is started when the PDCCH is monitored, and the terminal is required to continuously monitor the PDCCH prior to timeout of the first timer. Upon detection of the PDCCH transmitted to the terminal, the first timer is restarted; and upon timeout of the first timer, the terminal may stop monitoring the PDCCH and monitor the wake-up signal by the wake-up receiver. FIG. 17 is a schematic diagram of a paging cycle. In a paging cycle 31, a time unit where the wake-up signal is located is a first time unit 32, a time unit where the PDCCH is monitored is the second time unit 33, there is a delay 34 between the first time unit and the second time unit, and at a final time point of the second time unit 33, the first timer times out and the terminal stops monitoring the PDCCH.

In some embodiments, in the case that the terminal is in a connected state, a UE identifier of the terminal is acquired based on a cell radio network temporary identifier (C-RNTI) of the terminal.

For example, the UE identifier is the C-RNTI corresponding to the terminal: UE_ID=C-RNTI;
wherein UE_ID denotes the UE identifier, and C-RNTI denotes the C-RNTI corresponding to the terminal.

Alternatively, the UE identifier is calculated based on the C-RNTI: UE_ID=C-RNTI mod N; where UE_ID denotes the UE identifier, C-RNTI denotes the C-RNTI corresponding to the terminal, mod denotes modulus calculation, and N is in a value range of positive integers. In some embodiments, N is 1024.

In some embodiments, in the case that the terminal is in the connected state, a UE group identifier of the terminal is acquired based on a group RNTI of the terminal.

For example, the UE group identifier is the group RNTI corresponding to the terminal: UE_ID=RNTI; where UE_ID denotes the UE group identifier, and RNTI denotes a group RNTI corresponding to a UE group.

Alternatively, the UE group identifier is calculated based on the group RNTI: UE_ID=RNTI mod N; where UE_ID denotes the UE group identifier, RNTI denotes the group RNTI corresponding to the UE group, mod denotes modulus calculation, and N is in a value range of positive integers. In some embodiments, N is 1024.

In some embodiments, in the case that the terminal is in an idle state or an inactive state, a UE identifier of the terminal is acquired based on an evolved packet system temporary mobile station identity (S-TMSI) of the terminal.

For example, the UE identifier is the S-TMSI corresponding to the terminal: UE_ID=S-TMSI; where UE_ID denotes the UE identifier, and S-TMSI denotes the S-TMSI corresponding to the terminal.

Alternatively, the UE identifier is calculated based on the S-TMSI: UE_ID=S-TMSI mod N; where UE_ID denotes the UE identifier, S-TMSI denotes the S-TMSI corresponding to the terminal, mod denotes modulus calculation, and N is in a value range of positive integers. In some embodiments, N is 1024.

Further, in some embodiments, the UE group identifier is acquired by modulus calculation based on the UE identifier.

The method for receiving wake-up signals may include receiving the wake-up signal periodically or receiving the wake-up signal. In the case that the wake-up signal is received periodically, the wake-up signal is received according to a wake-up cycle.

In summary, in the method according to the embodiments, under the condition that a WUR signal can be used, a wake-up signal is transmitted by using the WUR signal; and the PDCCH is monitored only in the case that the wake-up signal carries a UE identifier or UE group identifier of a terminal, such that the dimensionality of the method for receiving wake-up signals is expanded and the energy consumption of the terminal during data transmission is effectively reduced, better power saving performance is provided for the terminal, and thus the endurance time of the terminal is prolonged.

Description is given hereinafter for the second way in which the wake-up signal carries a DRX configuration identifier or a DRX group configuration identifier.

FIG. 18 is a flowchart of a method for receiving wake-up signals according to some exemplary embodiments of the present disclosure. Description is given in the embodiments based on an example in which the method is appliable to a terminal. The method includes the following processes.

**In process** 614, a wake-up signal is received, wherein the wake-up signal carries a DRX configuration identifier or a DRX group configuration identifier of the terminal.

Exemplarily, the wake-up signal carries reception information of a PDCCH; and the wake-up signal includes a WUR signal. Exemplarily, the wake-up signal adopts a first transmission mode, that is, the WUR signal is transmitted in the first transmission mode, while the PDCCH adopts a second transmission mode. At least one of a receiver, a waveform, a modulation mode, a coding mode, or a multiple access mode is different between the first transmission mode and the second transmission mode.

The wake-up signal carries identification information, wherein the identification information includes a DRX configuration identifier or a DRX group configuration identifier.

**In process 624,** the PDCCH is monitored in a second time unit associated with the wake-up signal in the case that the wake-up signal carries the DRX configuration identifier or the DRX group configuration identifier of the terminal.

DRX signaling (DRX-Config) configures a DRX-related parameter for the terminal. The DRX-related parameter includes, but is not limited to, at least one of: a timer duration, a DRX cycle, or an offset. In some embodiments, the network device configures the DRX-related parameter for the terminal, such that transmissions of different terminals in time are averaged and a processing capability and resource utilization efficiency of the network device are improved.

DRX configuration is for grouping of terminals. The DRX configuration corresponds to the DRX configuration identifier. The wake-up signal carries the DRX configuration identifier or the DRX group configuration identifier. The terminal corresponding to the DRX configuration identifier or the DRX group configuration identifier carried in the wake-up signal may turn on a primary receiver according to the wake-up signal to monitor the PDCCH in the second time unit associated with the wake-up signal.

Exemplarily, a time unit where the wake-up signal is located is a first time unit, a time unit where the PDCCH is monitored is the second time unit, and the second time unit is a time unit associated with the wake-up signal. Time lengths of the first time unit and the second time unit are generally different, but a situation where they are the same is not excluded. There is a delay between the first time unit and the second time unit.

In some embodiments, the second time unit is determined based on the first time unit and a delay, and the delay describes a time interval between the first time unit and the second time unit.

Further, in some embodiments, the delay is further determined in the following manner.

The delay is determined based on a most recent ON duration after the first time unit.

Exemplarily, a start time of the second time unit is a start time of a relevant ON duration, the relevant on duration is a most recent ON duration after the first time unit satisfies a first delay, a second delay is between an end time of the first delay and a most recent PDCCH monitoring occasion, and the delay is a sum of the first delay and the second delay.

In some embodiments, a DRX group configuration identifier of the terminal is acquired based on a DRX configuration identifier of the terminal. For example, the DRX group configuration identifier is acquired by modulus calculation based on the DRX configuration identifier of the terminal.

FIG. 19 is a schematic diagram of DRX cycles. DRX cycles of UE1, UE2, and UE3 are shown. Since the above three terminals are configured with different DRX configurations, ON durations and DRX opportunities in the DRX cycles of the three terminals are also different. The three terminals correspond to a first DRX configuration identifier, a second DRX configuration identifier, and a third DRX configuration identifier. In the case that the DRX configuration identifier carried in the wake-up signal matches the DRX configuration corresponding to the terminal, the terminal monitors the PDCCH in the second time unit. For example, the wake-up signal carries the second DRX configuration identifier, the second DRX configuration identifier corresponding to UE2, and the UE2 monitors the PDCCH in the second time unit.

In some embodiments, the PDCCH is monitored based on a first timer. For the introduction to the first timer, reference is made to process 622 above.

It should be noted that DRX performed according to a DRX mechanism and DRX performed according to an indication of the wake-up signal are two independent modes, and receiving the wake-up signal is irrelevant to related parameters in the DRX mechanism. The above two modes may co-exist, and switching is performed between the two modes according to a rule or a signaling indication.

The method for receiving wake-up signals may include receiving the wake-up signal periodically or receiving the wake-up signal. In the case that the wake-up signal is received periodically, the wake-up signal is received according to a wake-up cycle. In some embodiments, in the case that the wake-up signal carries a DRX configuration identifier or a DRX group configuration identifier, the wake-up cycle is shorter than the DRX cycle.

Exemplarily, FIG. 20 is a schematic diagram of a DRX cycle and a wake-up cycle. For further reduction of power consumption of the wake-up receiver, the wake-up receiver is configured to perform DRX with reference to the DRX mechanism, the wake-up receiver of the terminal receives the wake-up signal according to a wake-up cycle 42, the wake-up cycle 42 is shorter than a DRX cycle 31, and the wake-up signal is received in a wake-up pattern in the wake-up cycle 42. Compared with the primary receiver, the wake-up receiver consumes less energy and reduces a data transmission delay. The wake-up cycle 42 may be configured independently of DRX configuration.

In summary, in the method according to the embodiments, under the condition that a WUR signal can be used, a wake-up signal is transmitted by using the WUR signal; and the PDCCH is monitored only in the case that the wake-up signal carries a DRX configuration identifier or a DRX group configuration identifier of a terminal, such that the dimensionality of the method for receiving wake-up signals is expanded and the energy consumption of the terminal during data transmission is effectively reduced, better power saving performance is provided for the terminal, and thus the endurance time of the terminal is prolonged.

Description is given hereinafter for the third way in which the wake-up signal carries a PO/PF identifier or a PO/PF group identifier:

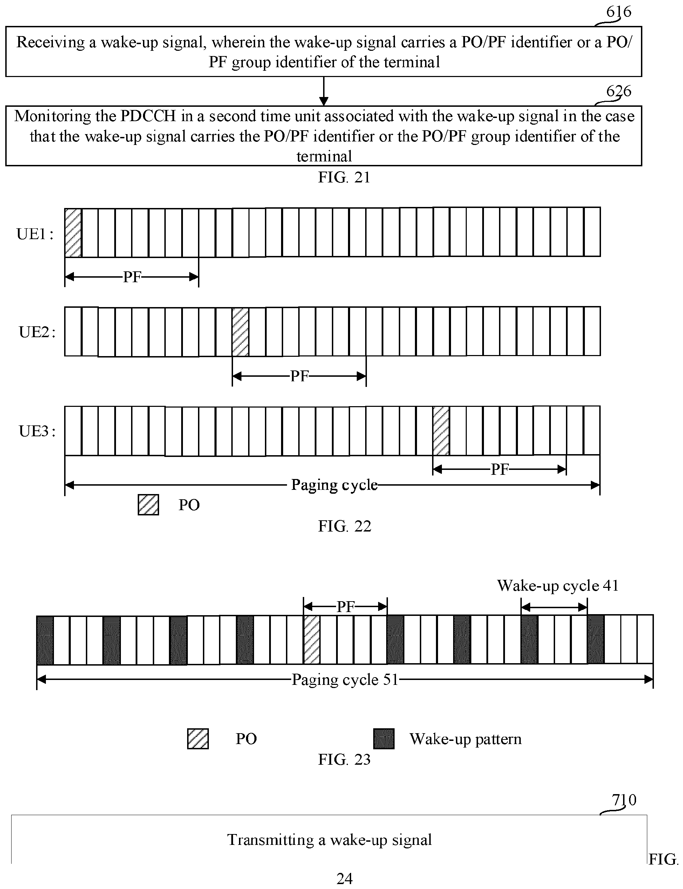

FIG. 21 is a flowchart of a method for receiving wake-up signals according to some exemplary embodiments of the present disclosure. Description is given in the embodiments based on an example in which the method is appliable to a terminal. The method includes the following processes.

**In process 616,** a wake-up signal is received, wherein the wake-up signal carries a PO/PF identifier or a PO/PF group identifier of the terminal.

Exemplarily, the wake-up signal carries reception information of a PDCCH; and the wake-up signal includes a WUR signal. Exemplarily, the wake-up signal adopts a first transmission mode, that is, the WUR signal is transmitted in the first transmission mode, while the PDCCH adopts a second transmission mode. At least one of a receiver, a waveform, a modulation mode, a coding mode, or a multiple access mode is different between the first transmission mode and the second transmission mode.

The wake-up signal carries identification information, wherein the identification information includes a PO/PF identifier or a PO/PF group identifier.

**In process 626,** the PDCCH is monitored in a second time unit associated with the wake-up signal in the case that the wake-up signal carries the PO/PF identifier or the PO/PF group identifier of the terminal.

Exemplarily, a paging cycle (PagingCycle) includes 32, 64, 128, and 256 radio frames, and indication information (nAndPagingFrameOffset) indicates a number N of PFs included in the paging cycle and positions of the PFs. N is in a value range of {T, T/2, T/4, T/8, T/16}, wherein T denotes the paging cycle. Ns denotes a number of POs in a PF, including 1, 2, and 4. Taking T=128, N=T/8, Ns=2 as an example, there are 16 PFs and 32 POs in 128 radio frames of the paging cycle.

The terminal calculates corresponding POs according to the UE identifier, that is, the terminal is divided into groups. Each PO corresponds to a UE group. Exemplarily, one paging cycle is divided into 32 POs, i.e., 32 UE groups.

The wake-up signal carries PO/PF identifiers of the terminals, for example, the 32 POs or 16 PFs above. In some embodiments, the POs or PFs in one paging cycle are numbered in chronological order. That is, POs are numbered 0-31, and PFs are numbered 0-15. The above numbers are PO or PF identifiers.

Further, in some embodiments, the 32 POs and the 16 PFs may be further grouped, and the wake-up signal carries PO group identifiers or PF group identifiers.

The PO/PF group identifier is acquired based on the PO/PF identifier. For example, the PO/PF group identifier is acquired by modulus calculation based on the PO/PF identifier of the terminal.

Exemplarily, a time unit where the wake-up signal is located is a first time unit, a time unit where the PDCCH is monitored is the second time unit, and the second time unit is a time unit associated with the wake-up signal. Time lengths of the first time unit and the second time unit are generally different, but a situation where they are the same is not excluded. There is a delay between the first time unit and the second time unit.

In some embodiments, the second time unit is determined based on the first time unit and a delay, and the delay describes a time interval between the first time unit and the second time unit.

Further, in some embodiments, the delay is further determined in the following manner.

The delay is determined based on a most recent PO after the first time unit.

Exemplarily, a start time of the second time unit is a start time of a relevant PO, the relevant PO is a most recent PO after the first time unit satisfies a first delay, a second delay is between an end time of the first delay and a most recent PDCCH monitoring occasion, and the delay is a sum of the first delay and the second delay.

FIG. 22 is a schematic diagram of a paging cycle. Paging cycles of UE1, UE2, and UE3 are shown. The above three terminals determine corresponding PFs and POs based on paging configuration and UE identifiers, and POs and PFs in one paging cycle are numbered as PO/PF identifiers. The PO/PF identifier or the PO/PF group identifier carried in the wake-up signal is matched with the PO/PF identifiers determined by the terminals. The corresponding matching terminal monitors the PDCCH in the second time unit associated with the wake-up signal.

The method for receiving wake-up signals may include receiving the wake-up signal periodically or receiving the wake-up signal. In the case that the wake-up signal is received periodically, the wake-up signal is received according to a wake-up cycle. In some embodiments, when the wake-up signal carries a PO/PF identifier or a PO/PF group identifier, the wake-up cycle is shorter than the paging cycle.

Exemplarily, FIG. 23 is a schematic diagram of a paging cycle and a wake-up cycle. A wake-up cycle 41 is shorter than a paging cycle 51, and the wake-up cycle 42 may be configured independently of paging configuration.

In summary, in the method according to the embodiments, under the condition that a WUR signal can be used, a wake-up signal is transmitted by using the WUR signal; and the PDCCH is monitored only in the case that the wake-up signal carries a PO/PF identifier or a PO/PF group identifier of a terminal, such that the dimensionality of the method for receiving wake-up signals is expanded and the energy consumption of the terminal during data transmission is effectively reduced, better power saving performance is provided for the terminal, and thus the endurance time of the terminal is prolonged.

FIG. 24 is a flowchart of a method for transmitting wake-up signals according to some exemplary embodiments of the present disclosure. Description is given in the embodiments based on an example in which the method is appliable to a network device. The method includes the following processes.

**In process 710,** a wake-up signal is transmitted.

Exemplarily, the wake-up signal carries reception information of a PDCCH; and the wake-up signal includes a WUR signal. Exemplarily, the wake-up signal adopts a first transmission mode, that is, the WUR signal is transmitted in the first transmission mode, while the PDCCH adopts a second transmission mode. At least one of a receiver, a waveform, a modulation mode, a coding mode, or a multiple access mode is different between the first transmission mode and the second transmission mode.

Exemplarily, the wake-up receiver in the terminal receives the wake-up signal. That is, the wake-up signal is received in the first transmission mode.

In some embodiments, the wake-up signal carries identification information. Exemplarily, the identification information includes, but is not limited to, at least one of:
- a UE identifier or a UE group identifier (exemplarily, the PDCCH carries scheduling information and/or common control information for data transmission);
- a DRX configuration identifier or a DRX group configuration identifier (exemplarily, the PDCCH carries scheduling information and/or common control information for data transmission); or
- a PO/PF identifier or a PO/PF group identifier (exemplarily, the PDCCH carries paging indication information).

Further, in some embodiments, in the case that the terminal is in a connected state, a UE identifier of the terminal is acquired based on a C-RNTI of the terminal.

In the case that the terminal is in the connected state, a UE group identifier of the terminal is acquired based on a group RNTI of the terminal.

In the case that the terminal is in an idle/inactive state, a UE identifier of the terminal is acquired based on an S-TMSI of the terminal.

A DRX group configuration identifier of the terminal is acquired based on a DRX configuration identifier of the terminal.

A PO/PF group identifier of the terminal is acquired based on a PO/PF identifier.

In some embodiments, the method further includes: transmitting the PDCCH in a second time unit associated with the wake-up signal.

It should be noted that in the embodiments of the present disclosure, the wake-up signal is received by a wake-up receiver, the PDCCH is received by a primary receiver, the wake-up receiver wakes up the primary receiver upon receiving the wake-up signal, and the primary receiver receives the PDCCH when in an on state.

In summary, in the method according to the embodiments, under the condition that a WUR signal can be used, a wake-up signal is transmitted by using the WUR signal, such that the energy consumption of a network device during data transmission is effectively reduced, and better power saving performance is provided for the network device.

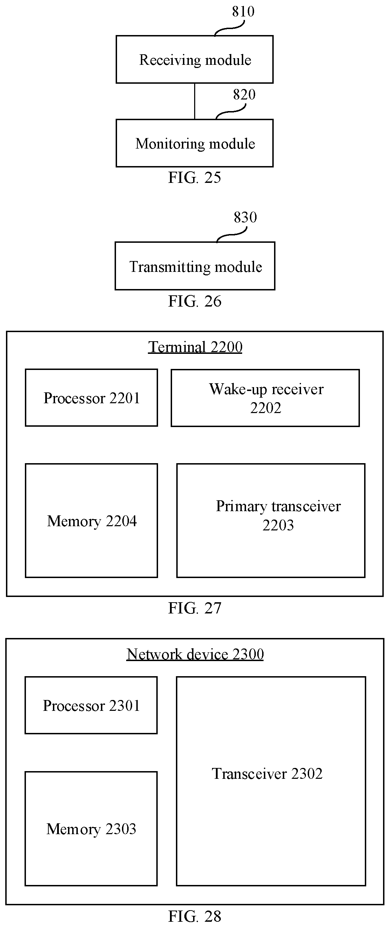

FIG. 25 is a block diagram of an apparatus for receiving a wake-up signal according to some exemplary embodiments of the present disclosure.

The apparatus includes: a receiving module 810, configured to receive a wake-up signal, wherein the wake-up signal carries reception information of a PDCCH, and the wake-up signal includes a WUR signal.

In some embodiments, the wake-up signal carries identification information.

In some embodiments, the apparatus further includes: a monitoring module 820, configured to monitor the PDCCH in a second time unit associated with the wake-up signal in the case that the wake-up signal carries identification information of the terminal.

In some embodiments, the identification information includes at least one of: a UE identifier or a UE group identifier; a DRX configuration identifier or a DRX group configuration identifier; or a PO/PF identifier or a PO/PF group identifier.

In some embodiments, the terminal is in a connected state; and a UE identifier of the terminal is acquired based on a C-RNTI of the terminal; or a UE group identifier of the terminal is acquired based on a group RNTI of the terminal.

In some embodiments, the terminal is in an idle/inactive state; and a UE identifier of the terminal is acquired based on an S-TMSI of the terminal.

In some embodiments, the DRX group configuration identifier of a terminal is acquired based on the DRX configuration identifier of the terminal.

In some embodiments, the PO/PF group identifier is acquired based on the PO/PF identifier.

In some embodiments, the receiving module 810 is further configured to receive the wake-up signal according to a wake-up cycle, wherein the wake-up cycle is a time interval in which a time unit configured to receive the wake-up signal occurs.

In some embodiments, the wake-up cycle is shorter than a DRX cycle in the case that the wake-up signal carries a DRX configuration identifier or a DRX group configuration identifier.

In some embodiments, the wake-up cycle is shorter than a paging cycle in the case that the wake-up signal carries a PO/PF identifier or a PO/PF group identifier.
In some embodiments, the second time unit associated with the wake-up signal is determined based on a first time unit where the wake-up signal is located and a delay, and the delay describes a time interval between the first time unit and the second time unit.
In some embodiments, the delay is predefined; or the delay is pre-configured by a network device; or the delay is determined based on a search space of the PDCCH; or the delay is determined based on indication information of the wake-up signal.
In some embodiments, the delay is determined based on a most recent ON duration after the first time unit in the case that the wake-up signal carries a DRX configuration identifier or a DRX group configuration identifier.

In some embodiments, the delay is determined based on a most recent PO after the first time unit in the case that the wake-up signal carries a PO/PF identifier or a PO/PF group identifier.

FIG. 26 is a block diagram of an apparatus for transmitting a wake-up signal according to some exemplary embodiments of the present disclosure.

The apparatus includes a transmitting module 830, configured to transmit a wake-up signal, wherein the wake-up signal carries reception information of a PDCCH, and the wake-up signal includes a WUR signal.

In some embodiments, the wake-up signal carries identification information.

In some embodiments, the identification information includes at least one of: a UE identifier or a UE group identifier; a DRX configuration identifier or a DRX group configuration identifier; or a PO/PF identifier or a PO/PF group identifier.

In some embodiments, a terminal is in a connected state; and a UE identifier of the terminal is acquired based on a C-RNTI of the terminal; or a UE group identifier of the terminal is acquired based on a group RNTI of the terminal.

In some embodiments, a terminal is in an idle/inactive state; and a UE identifier of the terminal is acquired based on an S-TMSI of the terminal.

In some embodiments, a DRX group configuration identifier of a terminal is acquired based on a DRX configuration identifier of the terminal.

In some embodiments, the PO/PF group identifier is acquired based on the PO/PF identifier.

It should be noted that, when the apparatus according to the above embodiments implements the functions thereof, the division of the functional modules is merely exemplary. In practical application, the functions may be allocated to different function modules for implementation depending on actual requirements. That is, the device may be divided into different functional modules in terms of internal structure, to implement all or part of the functions described above.

For the apparatus in the foregoing embodiments, specific manner in which each module performs operations has been described in detail in the embodiments related to the method, and details are not described herein.

FIG. 27 is a schematic structural diagram of a terminal according to some exemplary embodiments of the present disclosure. The terminal may include a processor 2201, a wake-up receiver 2202, a primary transceiver 2203, and a memory 2204.

The processor 2201 includes one or more processing cores. The processor 2201 runs various functional applications by running software programs and modules.

The wake-up receiver 2202 includes a zero-power receiver or a low-power receiver. The low-power receiver is a receiver whose energy consumption is less than a predetermined condition. Illustratively, the power consumption of the low power receiver is less than that of a traditional receiver in the transceiver 2203. Correspondingly, the wake-up receiver 2202 may also correspond to a wake-up transmitter, which is independent of the wake-up receiver 2202 or integrated into a same wake-up transceiver.

The primary transceiver 2203 may be configured to receive and transmit information. The primary transceiver 2203 may be a communication chip. The primary transceiver 2203 may alternatively be implemented separately as a traditional transmitter and receiver. The traditional receiver is a primary receiver relative to the wake-up receiver 2202.

The memory 2204 may be configured to store a computer program. The processor 2201 is configured to run the computer program to implement the processes performed by the terminal in the above method embodiments.

In some embodiments, the wake-up receiver 2202 is configured to receive a wake-up signal, wherein the wake-up signal carries reception information of a PDCCH, and the wake-up signal includes a WUR signal.

In some embodiments, the wake-up signal carries identification information.

In some embodiments, the primary transceiver 2203 is configured to monitor the PDCCH in a second time unit associated with the wake-up signal in the case that the wake-up signal carries identification information of the terminal.

In some embodiments, the identification information includes at least one of: a UE identifier or a UE group identifier; a DRX configuration identifier or a DRX group configuration identifier; or a PO/PF identifier or a PO/PF group identifier.

In some embodiments, the terminal is in a connected state; and a UE identifier of the terminal is acquired based on a C-RNTI of the terminal; or a UE group identifier of the terminal is acquired based on a group RNTI of the terminal.

In some embodiments, the terminal is in an idle/inactive state; and a UE identifier of the terminal is acquired based on an S-TMSI of the terminal.

In some embodiments, a DRX group configuration identifier of the terminal is acquired based on a DRX configuration identifier of the terminal.

In some embodiments, the PO/PF group identifier is acquired based on the PO/PF identifier.

In some embodiments, the wake-up receiver 2202 is further configured to receive the wake-up signal according to a wake-up cycle, and the wake-up cycle is a time interval in which a time unit configured to receive the wake-up signal occurs.

In some embodiments, the wake-up cycle is shorter than a DRX cycle in the case that the wake-up signal carries a DRX configuration identifier or a DRX group configuration identifier.

In some embodiments, the wake-up cycle is shorter than a paging cycle in the case that the wake-up signal carries a PO/PF identifier or a PO/PF group identifier.

In some embodiments, the second time unit associated with the wake-up signal is determined based on a first time unit where the wake-up signal is located and a delay, and the delay describes a time interval between the first time unit and the second time unit.

In some embodiments, the delay is predefined; or the delay is pre-configured by a network device; or the delay is determined according to a search space of the PDCCH; or the delay is determined according to indication information of the wake-up signal.

In some embodiments, the delay is determined based on a most recent ON duration after the first time unit in the case that the wake-up signal carries a DRX configuration identifier or a DRX group configuration identifier.

In some embodiments, the delay is determined based on a most recent PO after the first time unit in the case that the wake-up signal carries a PO/PF identifier or a PO/PF group identifier.

In addition, the memory 2204 may be implemented by any type of volatile or non-volatile storage device or a combination thereof. The volatile or non-volatile storage device includes, but is not limited to, a random-access memory (RAM), a read-only memory (ROM), an erasable programmable read-only memory (EPROM), an electrically erasable programmable read-only memory (EEPROM), a flash memory or other solid-state memory technologies, a compact disc read-only memory (CD-ROM), a digital versatile disc (DVD) or other optical memories, a magnetic tape cartridge, a magnetic tape, a magnetic disk memory, or other magnetic storage devices.

FIG. 28 is a schematic structural diagram of a network device according to some exemplary embodiments of the present disclosure. The network device may include a processor 2301, a transceiver 2302, and a memory 2303.

The processor 2301 includes one or more processing cores. The processor 2301 runs various functional applications by running software programs and modules.

The transceiver 2302 may be configured to receive and transmit information. The transceiver 2302 may be a communication chip. The transceiver 2302 may alternatively be implemented separately as a transmitter and a receiver.

The memory 2303 may be configured to store a computer program. The processor 2301 is configured to run the computer program to implement the processes performed by the network device in the above method embodiments.

In some embodiments, the transceiver 2302 is configured to transmit a wake-up signal, wherein the wake-up signal carries reception information of a PDCCH, and the wake-up signal includes a WUR signal.

In some embodiments, the wake-up signal carries identification information.

In some embodiments, the identification information includes at least one of: a UE identifier or a UE group identifier; a DRX configuration identifier or a DRX group configuration identifier; or a PO/PF identifier or a PO/PF group identifier.

In some embodiments, a terminal is in a connected state; and a UE identifier of the terminal is acquired based on a C-RNTI of the terminal; or a UE group identifier of the terminal is acquired based on a group RNTI of the terminal.

In some embodiments, a terminal is in an idle/inactive state; and a UE identifier of the terminal is acquired based on an S-TMSI of the terminal.

In some embodiments, a DRX group configuration identifier of a terminal is acquired based on a DRX configuration identifier of the terminal.

In some embodiments, the PO/PF group identifier is acquired based on the PO/PF identifier.

In addition, the memory 2303 may be implemented by any type of volatile or non-volatile storage device or a combination thereof.

Some embodiments of the present disclosure further provide a computer-readable storage medium. The storage medium stores one or more computer programs. The one or more computer programs, when loaded and run by a processor, cause the processor to perform the method for receiving wake-up signals and/or the method for transmitting wake-up signals as described above.

In some embodiments, the computer-readable storage medium may include: a ROM, a RAM, a solid state drives (SSD), an optical disc, or the like. The RAM may include a resistance random access memory (ReRAM) and a dynamic random access memory (DRAM).

Some embodiments of the present disclosure further provide a chip. The chip includes programmable logic circuitry and/or one or more program instructions. The chip, when running, is caused to perform the method for receiving wake-up signals and/or the method for transmitting wake-up signals as described above.

Some embodiments of the present disclosure further provide a computer program product or a computer program. The computer program product or the computer program includes one or more computer instructions. The one or more computer instructions are stored in a computer-readable storage medium, and when read from the computer-readable storage medium and executed by a processor, cause the processor to perform the method for receiving wake-up signals and/or the method for transmitting wake-up signals as described above.

## Claims

1. A method for receiving wake-up signals, wherein the method is applicable to a terminal, and the method comprises:
receiving a wake-up signal, wherein the wake-up signal carries reception information of a physical downlink control channel (PDCCH), and the wake-up signal comprises a wake-up radio (WUR) signal.

2. The method according to claim 1, wherein the wake-up signal carries identification information.

3. The method according to claim 2, wherein the method further comprises:
monitoring the PDCCH in a second time unit associated with the wake-up signal in a case that the wake-up signal carries identification information of the terminal.

4. The method according to claim 2 or 3, wherein the identification information comprises at least one of:
a user equipment (UE) identifier or a UE group identifier;
a discontinuous reception (DRX) configuration identifier or a DRX group configuration identifier; or
a paging occasion (PO)/paging frame (PF) identifier or a PO/PF group identifier.

5. The method according to claim 4, wherein the terminal is in a connected state; and
a UE identifier of the terminal is acquired based on a cell radio network temporary identifier (C-RNTI) of the terminal; or
a UE group identifier of the terminal is acquired based on a group RNTI of the terminal.

6. The method according to claim 4, wherein the terminal is in an idle/inactive state; and
a UE identifier of the terminal is acquired based on an evolved packet system temporary mobile station identity (S-TMSI) of the terminal.

7. The method according to claim 4, wherein
a DRX group configuration identifier of the terminal is acquired based on a DRX configuration identifier of the terminal.

8. The method according to claim 4, wherein
the PO/PF group identifier is acquired based on the PO/PF identifier.

9. The method according to any one of claims 1 to 3, wherein receiving the wake-up signal comprises:
receiving the wake-up signal according to a wake-up cycle, the wake-up cycle being a time interval in which a time unit configured to receive the wake-up signal occurs.

10. The method according to claim 9, wherein the wake-up cycle is shorter than a DRX cycle in a case that the wake-up signal carries a DRX configuration identifier or a DRX group configuration identifier.

11. The method according to claim 9, wherein the wake-up cycle is shorter than a paging cycle in a case that the wake-up signal carries a PO/PF identifier or a PO/PF group identifier.

12. The method according to claim 3, wherein
the second time unit associated with the wake-up signal is determined based on a first time unit where the wake-up signal is located and a delay, wherein the delay describes a time interval between the first time unit and the second time unit.

13. The method according to claim 12, wherein
the delay is predefined; or
the delay is pre-configured by a network device; or
the delay is determined according to a search space of the PDCCH; or
the delay is determined according to indication information of the wake-up signal.

14. The method according to claim 12, wherein the delay is determined based on a most recent ON duration after the first time unit in a case that the wake-up signal carries a DRX configuration identifier or a DRX group configuration identifier.

15. The method according to claim 12, wherein the delay is determined based on a most recent PO after the first time unit in a case that the wake-up signal carries a PO/PF identifier or a PO/PF group identifier.

16. A method for transmitting wake-up signals, wherein the method is applicable to a network device, and the method comprises:
transmitting a wake-up signal, wherein the wake-up signal carries reception information of a physical downlink control channel (PDCCH), and the wake-up signal comprises a wake-up radio (WUR) signal.

17. The method according to claim 16, wherein the wake-up signal carries identification information.

18. The method according to claim 17, wherein the identification information comprises at least one of:
a user equipment (UE) identifier or a UE group identifier;
a discontinuous reception (DRX) configuration identifier or a DRX group configuration identifier; or
a paging occasion (PO)/ paging frame (PF) identifier or a PO/PF group identifier.

19. The method according to claim 18, wherein a terminal is in a connected state; and
a UE identifier of the terminal is acquired based on a cell radio network temporary identifier (C-RNTI) of the terminal; or
a UE group identifier of the terminal is acquired based on a group RNTI of the terminal.

20. The method according to claim 18, wherein a terminal is in an idle/inactive state; and
a UE identifier of the terminal is acquired based on an evolved packet system temporary mobile station identity (S-TMSI) of the terminal.

21. The method according to claim 18, wherein
a DRX group configuration identifier of a terminal is acquired based on a DRX configuration identifier of the terminal.

22. The method according to claim 18, wherein
the PO/PF group identifier is acquired based on the PO/PF identifier.

23. An apparatus for receiving wake-up signals, wherein the apparatus is applicable to a terminal, and the apparatus comprises:
a receiving module, configured to receive a wake-up signal, wherein the wake-up signal carries reception information of a physical downlink control channel (PDCCH), and the wake-up signal comprises a wake-up radio (WUR) signal.

24. The apparatus according to claim 23, wherein the wake-up signal carries identification information.

25. The apparatus according to claim 24, wherein the apparatus further comprises:
a monitoring module, configured to monitor the PDCCH in a second time unit associated with the wake-up signal in a case that the wake-up signal carries identification information of the terminal.

26. The apparatus according to claim 24 or 25, wherein the identification information comprises at least one of:
a user equipment (UE) identifier or a UE group identifier;
a discontinuous reception (DRX) configuration identifier or a DRX group configuration identifier; or
a paging occasion (PO)/ paging frame (PF) identifier or a PO/PF group identifier.

27. The apparatus according to claim 26, wherein the terminal is in a connected state; and
a UE identifier of the terminal is acquired based on a cell radio network temporary identifier (C-RNTI) of the terminal; or
a UE group identifier of the terminal is acquired based on a group RNTI of the terminal.

28. The apparatus according to claim 26, wherein the terminal is in an idle/inactive state; and
a UE identifier of the terminal is acquired based on an evolved packet system temporary mobile station identity (S-TMSI) of the terminal.

29. The apparatus according to claim 26, wherein
a DRX group configuration identifier of the terminal is acquired based on a DRX configuration identifier of the terminal.

30. The apparatus according to claim 26, wherein
the PO/PF group identifier is acquired based on the PO/PF identifier.

31. The apparatus according to any one of claims 23 to 25, wherein the receiving module is further configured to:
receive the wake-up signal according to a wake-up cycle, the wake-up cycle being a time interval in which a time unit configured to receive the wake-up signal occurs.

32. The apparatus according to claim 31, wherein the wake-up cycle is shorter than a DRX cycle in a case that the wake-up signal carries a DRX configuration identifier or a DRX group configuration identifier.

33. The apparatus according to claim 31, wherein the wake-up cycle is shorter than a paging cycle in a case that the wake-up signal carries a PO/PF identifier or a PO/PF group identifier.

34. The apparatus according to claim 25, wherein
the second time unit associated with the wake-up signal is determined based on a first time unit where the wake-up signal is located and a delay, wherein the delay describes a time interval between the first time unit and the second time unit.

35. The apparatus according to claim 34, wherein
the delay is predefined; or
the delay is pre-configured by a network device; or
the delay is determined according to a search space of the PDCCH; or
the delay is determined according to indication information of the wake-up signal.

36. The apparatus according to claim 34, wherein the delay is determined based on a most recent ON duration after the first time unit in a case that the wake-up signal carries a DRX configuration identifier or a DRX group configuration identifier.

37. The apparatus according to claim 34, wherein the delay is determined based on a most recent PO after the first time unit in a case that the wake-up signal carries a PO/PF identifier or a PO/PF group identifier.

38. An apparatus for transmitting wake-up signals, wherein the apparatus is applicable to a network device, and the apparatus comprises:
a transmitting module, configured to transmit a wake-up signal, wherein the wake-up signal carries reception information of a physical downlink control channel (PDCCH), and the wake-up signal comprises a wake-up radio (WUR) signal.

39. The apparatus according to claim 38, wherein the wake-up signal carries identification information.

40. The apparatus according to claim 39, wherein the identification information comprises at least one of:
a user equipment (UE) identifier or a UE group identifier;
a discontinuous reception (DRX) configuration identifier or a DRX group configuration identifier; or
a paging occasion (PO)/ paging frame (PF) identifier or a PO/PF group identifier.

41. The apparatus according to claim 40, wherein a terminal is in a connected state; and
a UE identifier of the terminal is acquired based on a cell radio network temporary identifier (C-RNTI) of the terminal; or
a UE group identifier of the terminal is acquired based on a group RNTI of the terminal.

42. The apparatus according to claim 40, wherein a terminal is in an idle/inactive state; and
a UE identifier of the terminal is acquired based on an evolved packet system temporary mobile station identity (S-TMSI) of the terminal.

43. The apparatus according to claim 40, wherein
a DRX group configuration identifier of a terminal is acquired based on a DRX configuration identifier of the terminal.

44. The apparatus according to claim 40, wherein
the PO/PF group identifier is acquired based on the PO/PF identifier.

45. A terminal, comprising: a wake-up receiver;
wherein the wake-up receiver is configured to receive a wake-up signal, wherein the wake-up signal carries reception information of a physical downlink control channel (PDCCH), and the wake-up signal comprises a wake-up radio (WUR) signal.

46. A network device, comprising: a transceiver;
wherein the transceiver is configured to transmit a wake-up signal, wherein the wake-up signal carries reception information of a physical downlink control channel (PDCCH), and the wake-up signal comprises a wake-up radio (WUR) signal.

47. A computer-readable storage medium, storing one or more computer programs, wherein the one or more computer programs, when loaded and run by a processor, cause the processor to perform the method for receiving wake-up signals as defined in any one of claims 1 to 15 or the method for transmitting wake-up signals as defined in any one of claims 16 to 22.

48. A chip, comprising: programmable logic circuitry and/or one or more program instructions, wherein the chip is run to perform the method for receiving wake-up signals as defined in any one of claims 1 to 15 or the method for transmitting wake-up signals as defined in any one of claims 16 to 22.

49. A computer program product or a computer program, comprising one or more computer instructions stored in a computer-readable storage medium, wherein the one or more computer instructions, when read from the computer-readable storage medium and executed by a processor, cause the processor to perform the method for receiving wake-up signals as defined in any one of claims 1 to 15 or the method for transmitting wake-up signals as defined in any one of claims 16 to 22.
